# EUROPÄISCHE PATENTSCHRIFT

(11) **EP 0 440 041 B1**
(45) Veröffentlichungstag und Bekanntmachung des Hinweises auf die Patenterteilung: **09.06.1993**
(21) Anmeldenummer: 91100485.1
(22) Anmeldetag: 17.01.1991
(51) Int. Cl.: F16D 65/02, F16D 55/02

(54) **Bremsbelag für Scheibenbremsen, insbesondere für Kraftfahrzeuge, und ein Verfahren für seine Herstellung.**
Brake pad for disc brakes, especially for motor vehicles, and a process for its manufacture.
Garniture de frein pour freins à disque, notamment pour véhicules à moteur, et procédé pour sa fabrication.

(30) Priorität: 18.01.1990 DE 9000489 U
(43) Veröffentlichungstag der Anmeldung: 07.08.1991
(73) Patentinhaber: AlliedSignal Bremsbelag GmbH, 21509 Glinde (DE)
(72) Erfinder: Karabiner Ralf, Dipl.Ing., W-2057 Wentorf (DE)
(74) Vertreter: Richter, Werdermann & Gerbaulet

(56) Entgegenhaltungen:
- EP-A- 0 311 239
- DE-A- 2 934 608
- GB-A- 1 492 642
- GB-A- 2 085 101
- US-A- 4 513 844

## Beschreibung

Die Erfindung betrifft einen Bremsbelag für Scheibenbremsen, insbesondere für Kraftfahrzeuge, und ein Verfahren für seine Herstellung. Der Bremsbelag besteht aus einem auf einer Vorderseite einer Trägerplatte fest angebrachten Block aus Reibwerkstoff und einem auf einer Rückseite der Trägerplatte angeordneten zur Befestigung an einem Bremskolben und zur Zentrierung dienenden und als Haltefeder bezeichneten Formteil, bestehend aus einer auf die Trägerplatte flächig aufgelegten Grundplatte und mehreren, insbesondere drei auskragend von der Trägerplatte wegweisend abgewinkelten Armen, wobei die Grundplatte der einen zur Trägerplatte hinweisend abgewinkelten und in eine in der Trägerplatte ausgebildete Einziehung eingreifenden Halterungsabschnitt aufweist, wobei auf der Trägerplatte eine geräuschdämpfende Folie angeordnet ist.

Bremsbeläge für Scheibenbremsen für Kraftfahrzeuge, insbesondere für Teilbelagscheibenbremsen, sind bekannt. Diese bestehen aus einer Trägerplatte mit einem darauf fest angebrachten Block aus einem Reibwerkstoff, wobei auf der der den Reibwerkstoff tragenden Vorderseite gegenüberliegenden Rückseite ein Formteil, das als Haltefeder bezeichnet wird, angeordnet ist. Diese Haltefeder dient dazu, den schwimmend in einer Bremsbelaghalterung geführten bremsbelagträger mit einem Bremskolben so zu verbinden, daß eine Bewegung der Trägerplatte gegen eine Bremsscheibe unter Einwirkung des Bremszylinders und eine entgegengesetzte Rückzugsbewegung möglich ist.

Dabei ist es notwendig, daß teilweise auch Zugkräfte auf dieses Formteil einwirken, so daß eine Sicherung gegen Verdrehen und gegen ein Lösen des Formteils auch unter Einwirkung von Zugkräften vorgesehen werden muß. Hierzu ist bisher das Formteil mit einer mittigen Durchbrechung versehen worden, durch die ein Kerbnagel bzw. ein Nietnagel hindurchgeführt wird, der eine in der Trägerplatte vorgesehene Durchbrechung durchgreift und in dieser befestigt ist. Weiterhin ist das Formteil, das drei von der Trägerplatte-wegweisend abgewinkelte Arme aufweist, im Randbereich der Grundplatte mit einem zur Trägerplatte hin abgewinkelten Halterungsabschnitt versehen, der in eine in der Trägerplatte ausgebildete Einziehung eingreift. Hierdurch wird eine Fixierung gegen Verdrehung der Grundplatte um die durch den Kerbnagel bzw. Nietnagel gebildete Drehachse erreicht. Zur Geräuschdämpfung wird bei derartigen Trägerplatten um den Auflagebereich der Grundplatte des Formteils herum eine Folie angeordnet. Ein solcher Bremsbelag wird in der nicht vorveröffentlichten EP-A-373 333 angegeben.

Es hat sich als nachteilig herausgestellt, daß zur Einbringung des Kerbnagels die Trägerplatte von vornherein mit einer entsprechenden Durchbrechung versehen werden muß, um hier den Kerbnagel anzuordnen. Diese Durchbrechung führt bei der Herstellung der Trägerplatte zu Nachteilen, und die Anordnung des Reibbelagwerkstoffes wird ebenfalls durch die Durchbrechung behindert. Daher ist es wünschenswert, eine Befestigung der Haltefeder so vorzusehen, so daß eine glatte Oberfläche auf beiden Seiten der Trägerplatte während des Herstellungsvorganges vorgesehen werden kann.

Es ist daher Aufgabe der vorliegenden Erfindung, einen Bremsbelag so zu schaffen, daß die Ausbildung einer Durchbrechung in der Trägerplatte zur Halterung der Haltefeder vermieden werden kann und daß gleichzeitig eine Ausbildung und Befestigung der Haltefeder an der Trägerplatte so möglich wird, daß diese gegen Verdrehen gesichert ist und auch Zugkräfte aufnehmen kann.

Zur Lösung dieser Aufgabe wird ein Bremsbelag der eingangs genannten Art vorgeschlagen, bei dem vorgesehen ist, daß der einen Winkel zur Grundplatte aufweisende Halterungsabschnitt in eine der geometrischen Form und dem Winkel des Halterungsabschnittes im wesentlichen entsprechende Einziehung in der Trägerplatte eingreifend und von aus dem Einziehungsrandbereich in die Einziehung mechanisch hineingedrücktem Trägerplattenmaterial zumindest teilweise überdeckt gehalten ist.

Bei dieser Ausbildung und Anordnung ist es möglich, auf die Einbringung einer Durchgangsbohrung in die Trägerplatte und den Reibwerkstoffblock während deren Herstellung zu verzichten und insbesondere die Trägerplatte während des Herstellungsvorganges glatt zu gestalten und erst vor Anordnung der Haltefeder mit entsprechend ausgebildeten Einziehungen zu versehen, in die dann die entsprechenden Halterungsabschnitte der Trägerplatte eingreifen. Die Zuordnung ist dabei so vorgesehen, daß die Einziehungen in der Trägerplatte in ihrer geometrischen Ausformung und im Winkel jeweils dem entsprechenden Halterungsabschnitt am die Haltefeder bildenden Formteil entsprechen, und zwar so, daß jeder Halterungsabschnitt vollständig in eine Einziehung einlegbar ist, so daß die Grundplatte des Formteils vollflächig auf die Oberfläche der Trägerplatte auflegbar ist. Nach dem Auf- bzw. Einlegen des Formteils auf die von dem Reibwerkstoffblock abgewandten Seite der Trägerplatte wird dann vermittels eines geeigneten Werkzeuges Trägerplattenmaterial aus dem vorderen oder seitlichen Randbereich jeder Einziehung in die Einziehung selbst verstemmt, d.h. es wird unter zur Hilfe mechanischer Einrichtungen Material in den Einziehungsbereich hineingedrückt, und zwar so, daß der jeweilige Halterungsabschnitt zumindest teilweise überdeckt wird. Hierdurch wird erreicht, daß die Halterungsabschnitte einerseits formschlüssig in die Trägerplatte eingreifen, so daß eine Sicherung gegen Verdrehen des Formteiles auf der Trägerplatte gegeben ist. Durch das die Halterungsabschnitte überdeckende Material aus dem Einziehungsrandbereich wird jeder Halterungsabschnitt fest in der Einziehung gehalten, so daß auch die Aufnahme von Zug- und Druckkräften durch die Haltefeder und die Übertragung auf die Trägerplatte möglich ist.

Es ist dabei möglich, daß nur ein Halterungsabschnitt verwendet wird, jedoch ist die Anordnung von mehreren, möglichst symmetrisch im Randbereich der Grundplatte des Formteils oder in der Mitte des Formteils angeordneten Halterungsabschnitten zu bevorzugen.

Die Ausformung der Halterungsabschnitte kann dabei sehr unterschiedlich sein. Es ist lediglich Voraussetzung, daß die Ausformung des Halterungsabschnittes der Ausformung der entsprechenden Einziehung in der Trägerplatte entspricht. So ist beispielsweise bei einer bevorzugten Ausführungsform vorgesehen, daß der Halterungsabschnitt aus einem zur Grundplatte einen Winkel, insbesondere einen Winkel von 90° aufweisenden Abschnitt und einen sich daran anschließenden grundplattenparallelen Abschnitt aufweist. Dieser treppenstufenartigen Ausbildung entspricht dann eine in gleicher Weise stufenartige Ausbildung des entsprechenden Einschnitts in der Trägerplatte. Jeder Halterungsabschnitt kann einerseits in Form einer angesetzten Zunge an der Grundplatte ausgebildet sein. Es ist aber auch möglich, in die Grundplatte entsprechende Einschnitte einzubringen und die so gebildeten Abschnitte durch Abbiegen zu Halterungsabschnitten auszubilden.

Auch die Abbiegung der Halterungsabschnitte und damit der Winkel zwischen dem Halterungsabschnitt und der Grundplatte ist so vorgesehen, daß der Winkel des jeweiligen Halterungsabschnittes dem Winkel einer entsprechenden Schräge in der dem Halterungsabschnitt zuzuordnenden Einziehung entspricht. Bevorzugterweise beträgt der Winkel 30°, 40° oder 90°. Um eine noch bessere Halterung zwischen dem jeweiligen Halterungsabschnitt und dem aus dem Einziehungsrandbereich in die Einziehung hineingedrückten Material sowohl bei teilflächiger als auch bei vollflächiger Überdeckung zu erreichen, kann vorgesehen sein, daß der Halterungsabschnitt an einer seiner Oberflächen eine Oberprofilierung als Halterungsprofil aufweist. Diese kann auch an der der Einziehung zu gewandten Seite des jeweiligen Halterungsabschnittes vorgesehen sein, um sozusagen ein Verkrallen des Abschnittes in der ihm zugeordneten Einziehung unter dem Druck des hineingedrückten Materials zu erreichen.

Gemäß einer bevorzugten Ausführungsform ist vorgesehen, daß jede Einziehung mit einem zusätzlichen, das hineingerückte Material überdeckenden und ggf. die Einziehung vollständig verfüllenden Material versehen wird. Hierdurch ist es möglich, eine weitgehend glatte Trägerplattenoberfläche zu schaffen. Wenn dann noch bevorzugterweise vorgesehen wird, daß das Material aus einer Korrosionsschutzmasse besteht, ist eine zusätzliche Sicherung der Dauerhaltbarkeit der Verbindung gegeben.

Gemäß einer weiteren bevorzugten Ausführungsform ist vorgesehen, daß zwischen der Grundplatte des Formteils und der Trägerplatte die geräuschdämpfende Folie angeordnet wird, wobei diese dann entsprechende Ausschnitte für die Halterungsabschnitte aufweisen kann. Hierdurch ist eine noch bessere Entkopplung und damit Geräuschdämpfung möglich.

Vorteilhafte Ausgestaltungen und zweckmäßige Weiterbildungen der Erfindung sind in den Unteransprüchen gekennzeichnet. Ausführungsbeispiele der Erfindung werden nachstehend anhand der Zeichnung näher erläutert. Es zeigen
**Fig.** **1** in einer Draufsicht einen an sich bekannten Bremsbelag für Scheibenbremsen mit einer sog. Haltefeder in einer schematischen Darstellung,
**Fig.** **2** in einer schaubildlichen Ansicht den Bremsbelag gem. Fig.1 in einer schematischen Darstellung,
**Fig.** **3** in einer schaubildlichen Ansicht eine Haltefeder in einer gem. Fig.1 vergrößerten schematischen Darstellung,
**Fig.** **4** in einer Draufsicht die Haltefeder mit den erfindungsgemäßen Halterungsabschnitten in einer schematischen Darstellung,
**Fig.** **5** in einer Teilansicht die Trägerplatte mit erfindungsgemäßen Einziehungen,
**Fig.** **6** in einer schaubildlichen Ansicht eine weitere Ausführungsform einer Haltefeder in der Zuordnung zu entsprechenden Einziehungen in der Trägerplatte in einer schematischen Darstellung,
**Fig.** **7 a)** die Einziehungen gem. Fig.5,

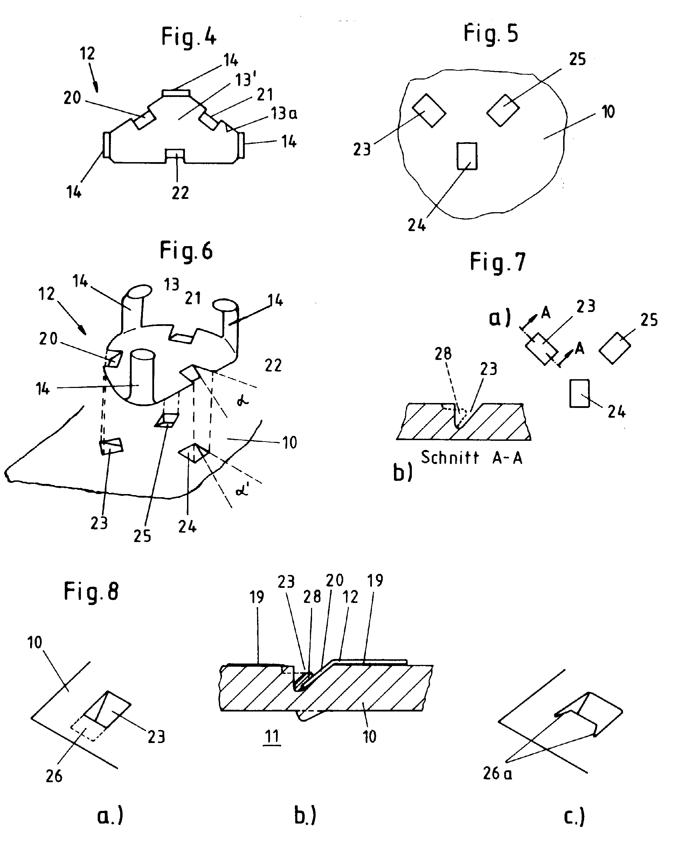

**Fig.** **7 b)** in einer senkrechten Schnittdarstellung eine Einziehung gem. Fig.7 a) in schematischer Darstellung,
**Fig.** **8 a)** in einer schaubildlichen Ansicht eine Einziehung,
**Fig.** **8 b)** in einer senkrechten Schnittdarstellung die Einziehung gem. Fig.8 a) mit einem eingelegten Halterungsabschnitt und aufgebrachtem Halterungsmaterial,
**Fig.** **8 c)** in einer schaubildlichen Ansicht eine weitere Ausführungsform einer Einziehung,

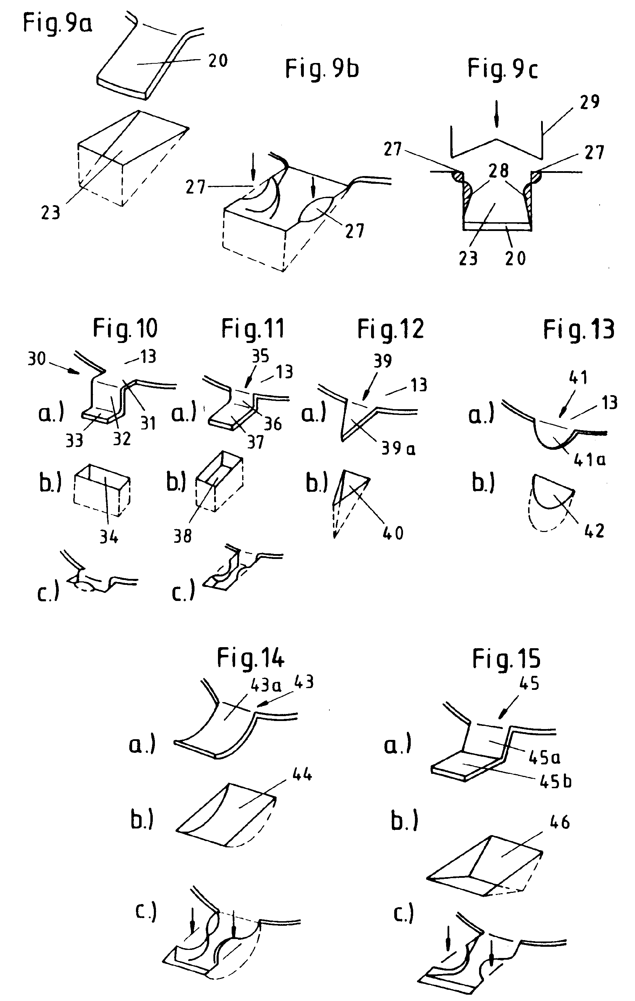

**Fig.** **9 a)-c)** in schaubildlichen Ansichten den Ablauf der Einbringung eines Halterungsabschnittes in schematischer Darstellung,
**Fig.** **10 a)-c)** in schaubildlichen Ansichten den Ablauf der Einbringung einer weiteren Ausführungsform eines Halterungsabschnittes in schematischer Darstellung,
**Fig.** **11 a)-c)** in schaubildlichen Ansichten den Ablauf der Einbringung einer weiteren Ausführungsform eines Halterungsabschnittes in schematischer Darstellung,
**Fig.** **12 u. Fig.** **13** in schaubildlichen Ansichten weiterer Ausführungsformen von Halterungsabschnitten und entsprechenden Einziehungen,
**Fig.** **14 a)-c)** in schaubildlichen Ansichten den Ablauf der Einbringung einer weiteren Ausführungsform eines Halterungsabschnittes in schematischer Darstellung,
**Fig.** **15 a)-c)** in schaubildlichen Ansichten den Ablauf der Einbringung einer weiteren Ausführungsform eines Halterungsabschnittes in schematischer Darstellung, und

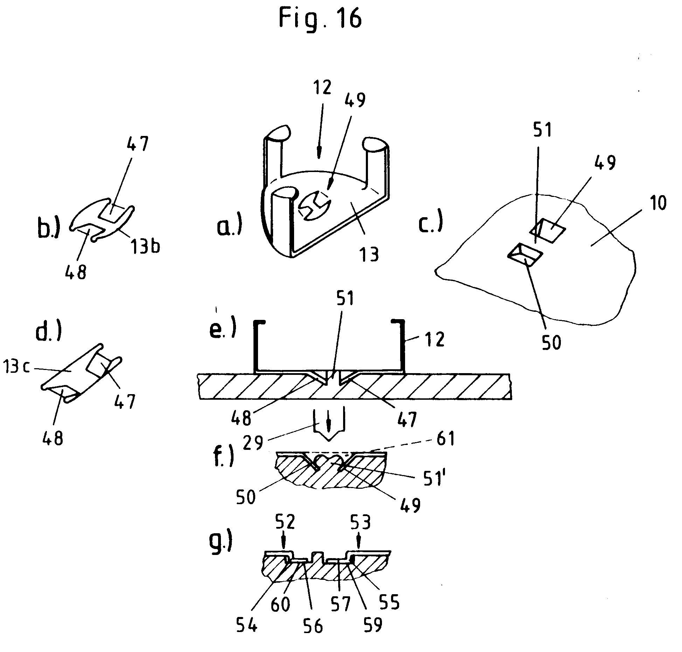

**Fig.** **16 a)-g)** in verschiedenen Ansichten Ausführungsformen von Halterungsabschnitten und Einziehungen sowie den Ablauf eines Einbringungsvorganges in rein schematischen Darstellungen.

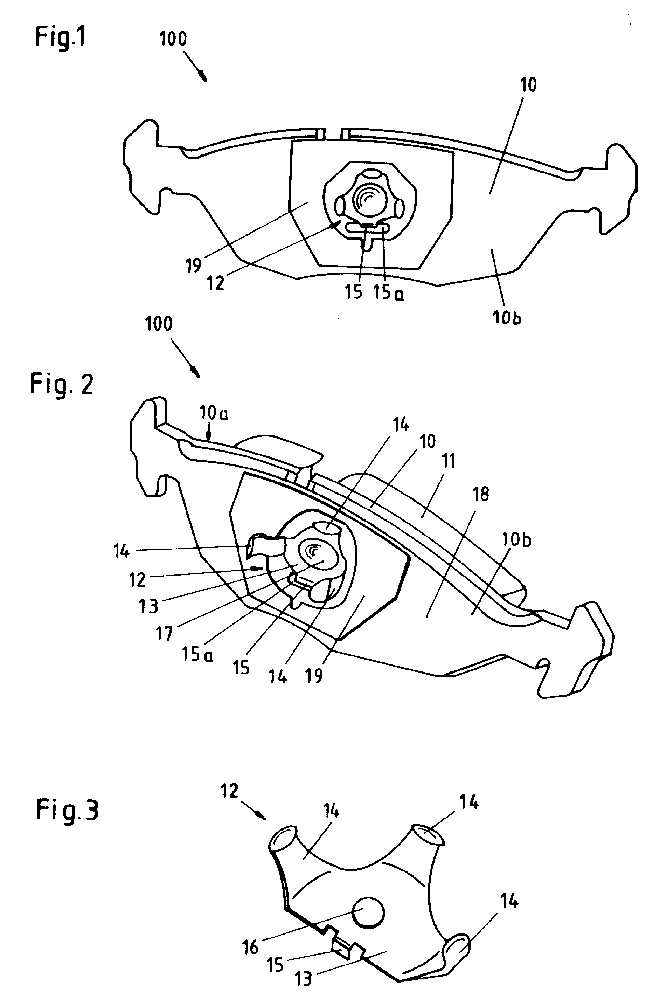

In Fig. 1 und 2 ist ein an sich bekannter Bremsbelag mit 100 bezeichnet, bei dem auf einer Trägerplatte 10 ein Block 11 aus einem Reibwerkstoff auf einer Seite 10a fest aufgebracht ist. Auf der gegenüberliegenden Seite 10b der Trägerplatte 10 ist ein als sog. Haltefeder 12 bezeichnetes Formteil angeordnet, das aus einer Grundplatte 13 und daran angeordneten, von der Grundplatte 13 und damit von der Trägerplatte 10 wegweisend abgewinkelten Armen 14 und einem im Randbereich 13a der Grundplatte 13 angeordneten Halterungsabschnitt 15, der aus einem zungenartigen zur Grundplatte hinweisend abgewinkelten Blech besteht, das in eine in der Trägerplatte 10 ausgebildete Einziehung 15a eingreift.

Die Trägerplatte 10 ist mit einer in der Zeichnung nicht dargestellten Durchbrechung versehen. Die Grundplatte 13 der Haltefeder 12 ist ebenfalls mit einer Durchbrechung 16 versehen, so daß ein Kerbnagel 17 oder ein Niet die Grundplatte 13 durchgreifend in die Durchbrechung der Trägerplatte 10 eingreift und die Haltefeder 12 haltert. Auf diese Weise liegt die Haltefeder 12 fest auf der Trägerplattenoberfläche 18 der Trägerplatte 10 auf und wird durch den in die Einziehung 15a eingreifenden Halterungsabschnitt 15 gegen eine Verdrehung um die Mittelachse der Durchbrechung 16 gesichert, so daß auf die Arme 14 aufgebrachte Drehmomente nicht zu einer Verdrehung der Haltefeder 12 führen (Fig.3).

Im Bereich der Haltefeder 12 ist auf der Trägerplattenoberfläche 18 der Trägerplatte 10 zur Geräuschdämpfung eine Folie 19 aufgebracht (Fig.1 u.2).

In den Fig. 4 - 7 ist die neuartige Ausbildung der Trägerplatte 10 mit dem nachstehend als Haltefeder 12 bezeichneten Formteil dargestellt. Hierbei ist die Haltefeder 12, die in an sich bekannter Weise ausgestaltete Arme 14 aufweist, mit den Halterungsabschnitten 20,21,22 versehen, die unter einem Winkel alpha von beispielsweise 40° abgewinkelt sind und in entsprechende Einziehungen 23, 24,25 in der Trägerplatte 10 eingreifen. Die Halterungsabschnitte 20,21,22 sind dabei im Randbereich 13a der Grundplatte 13 (bzw. 13' bei der in Fig.4 dargestellten, etwas eckigeren Ausführungsform der Haltefeder 12) angeordnet, und zwar in bezug auf die nicht dargestellte geometrische Mitte in einer in etwa symmetrischen Anordnung, um eine gleichmäßige Kraftaufnahme und Belastung der Halterungsabschnitte 20,21,22 sicherzustellen. Nach dem Aufsetzen der Grundplatte 13 auf die Trägerplatte 10 in der in Fig.6 angedeuteten Weise wird beispielsweise aus dem vorderen Einziehungsrandbereich 26 Material 28 der Trägerplatte 10 in die Einziehung 23 hineingedrückt, wie dies in Fig.7b) dargestellt ist.

Dieser Vorgang ist in Fig.8a) und b) noch verdeutlicht, wo dargestellt ist, daß aus dem vorderen Randbereich 26 Material der Trägerplatte 10 in die Einziehung 23 hineingedrückt wird und dieses den Halterungsabschnitt 20 überdeckende Material 28 den Halterungsabschnitt 20 in der Einziehung 23 festhält. Die Haltefeder 12 liegt dabei nicht direkt auf der Trägerplatte 10 auf, sondern es ist die Folie 19 dazwischen angeordnet, um eine Geräuschisolierung zu ermöglichen.

Wie in Fig.8b) angedeutet ist, kann die Einziehung 23 durch Eindrücken erzeugt werden, wobei sich ggf. eine entsprechende Materialverschiebung so ergibt, daß auf der den Reibwerkstoff 11 tragenden Seite eine entsprechende Ausbuchtung zeigt, die ggf. als zusätzliches Halterungselement für den Reibwerkstoff 11 verwendbar ist. Es kann auch vorgesehen sein, bei Einbringung der Einziehungen im Randbereich 26 zusätzliche Einschnitte einzubringen, wie diese in Fig.8c) bei 26a angedeutet sind, um das Hereindrücken des Materials in die Einziehung zu erleichtern.

Wie in Fig.9a) - 9c) dargestellt ist, kann auch vorgesehen werden, das Material aus den seitlichen Randbereichen 27 der Einziehung 23 in die Einziehung 23 hineinzudrücken, um so den Halterungsabschnitt 20 mit Material 28 zu überlagern und zu haltern. Der entsprechende Vorgang ist dabei in Fig.9c) angedeutet, wo zunächst ein entsprechendes Werkzeug 29 Verwendung findet, um das Material 28 in die Einziehung 23 hineinzudrücken. Ggf. kann dann ein weiteres Werkzeug verwendet werden, um das Material 28 vollflächig auf dem Halterungsabschnitt 20, der hier beispielsweise dargestellt ist, zu verteilen.

Die Form des einzelnen Halterungsabschnittes hängt von verschiedenen Einflüssen ab. Einerseits ist abhängig von den Materialkomponenten der Trägerplatte die geeignetste Form der Einziehung auszuwählen. Weiterhin ist abhängig von der Gestaltung der Haltefeder 12 eine Ausformung des Halterungsabschnitts zu wählen, die eine geeignete Krafteinleitung und Kraftüberleitung gestattet.

Dabei ist einerseits grundsätzlich die Ausformung als angehängte Materialzunge in Form eines entsprechend geformten bzw. gebogenen Materialabschnittes, d.h. Blechabschnittes, möglich. Andererseits kann auch vorgesehen werden, daß in die Grundplatte 13 entsprechende Einschnitte eingebracht werden, so daß aus der Grundplatte heraus die Abschnitte abbiegbar sind. Einige mögliche Ausführungsformen sind in den Fig.10 bis 15 dargestellt.

Bei der Ausführungsform gem. Fig.10 besteht der Halterungsabschnitt 30 zunächst aus einem grundplattenparallelen Abschnitt 31, an den sich der um etwa 90° abgewinkelte senkrechte Abschnitt 32 anschließt, an den sich wiederum ein grundplattenparalleler Abschnitt 33 anschließt. Die entsprechende Einziehung 34 ist in Fig.10b) dargestellt, wobei hier bevorzugterweise das Material aus dem vorderen Einziehungsrandbereich verschoben wird, wie es in Fig.10c) angedeutet ist.

Bei der in Fig.11 dargestellten Ausführungsform des Halterungsabschnittes 35 ist der abgewinkelte Abschnitt 32 ebenfalls senkrecht an der Grundplatte 13 angeordnet und es schließt sich hieran ein grundplattenparalleler Abschnitt 33 an. Die entsprechende Ausformung der Einziehung 38 ist bei Fig.11b) angedeutet, wobei hier bevorzugterweise eine Materialverschiebung aus den seitlichen Randbereichen der Einziehung vorgesehen ist, wie dies bei Fig.11c) angedeutet ist.

Bei der in Fig.12 dargestellten Ausführungsform des Halterungsabschnittes 39 weist der unter einem Winkel von etwa 40° abgewinkelte Halterungsabschnitt 39a eine dreieckförm Ausbildung mit nach außen gerichteter Spitze auf, wobei die bei Fig. 12b) dargestellte Einziehung 40 eine entsprechende Ausformung aufweist. Die Materialverschiebung aus den Seitenbereichen führt hier mit einfachen Mitteln zu einer vollflächigen Überdeckung des Abschnittes 39a.

Bei der weiteren in Fig.13 dargestellten Ausführungsform des Halterungsabschnittes 41 ist der abgewinkelte Abschnitt 41a halbkreisförmig und die entsprechende Einziehung 42 ebenfalls halbkreisförmig ausgebildet, wobei auch hier die Materialverschiebung aus dem Randbereich der Einziehung 42 zu einer vollflächigen Überdeckung führt.

Wie in Fig. 14 dargestellt ist, ist auch eine gebogene Ausbildung möglich, wobei der abgewinkelte Abschnitt 43a in sich gebogen ausgebildet ist und so in eine entsprechende halbmondförmige Einziehung 44 einlegbar ist.

Wie in Fig. 14c) angedeutet ist, führt eine Materialverschiebung hier zu einem besonders effektiven Untergreifen des Halterungsmaterials, so daß eine besonders feste Halterung sichergestellt ist. Ein vergleichbarer Effekt stellt sich bei der Ausführungsform gem. Fig.15 ein, bei der der Halterungsabschnitt 45 aus einem abgewinkelten Abschnitt 45a und einem nach oben abgewinkelten Abschnitt 45b besteht, die in eine dreieckförmige Einziehung 46 einlegbar sind und ebenfalls leicht mit Material überdeckt werden können, wie dies bei Fig.15c) angedeutet ist.

Bei der in Fig. 16 dargestellten weiteren Ausführungsform einer Haltefeder 12 ist in der geometrischen Mitte 49 ein etwa runder oder elliptischer Ausschnitt 13b vorgesehen, in dem die Halterungsabschnitte 47,48 ausgebildet sind. Die entsprechenden Einziehungen 49,50 sind einander gegenüberliegend in der Trägerplatte 10 angeordnet, wie dies in Fig.16c) angedeutet ist. Der Ausschnitt in der Mitte der Grundplatte 13 kann dabei auch eine rechteckige Form haben, wie dies bei dem in Fig. 16d) dargestellten Ausschnitt 13c mit den Halterungsabschnitten 47,48 angedeutet ist.

Diese Anordnung voneinander gegenüberliegenden Halterungsabschnitten 47,48 hat den Vorteil, daß bei der in Fig. 16c) dargestellten Anordnung der Einziehungen 49,50 ein zwischen diesen liegenden Materialsteg 51 des Materials der Trägerplatte 10 verbleibt. Wie in Fig. 16f) angedeutet ist, kann dann vorgesehen werden, den Materialsteg 51 vermittels eines Werkzeugs 29 zu der in Fig. 16f) angedeuteten Form 51' zu verdrängen, so daß die Halterungsabschnitte 49,50 vom Material übergriffen werden. Die gleichen Möglichkeiten bieten sich, wenn die Halterungsabschnitte 52,53 mit senkrechten Abschnitten 54,55 und grundplattenparallelen Abschnitten 56,57 versehen und in entsprechend ausgebildete Einziehungen 59,60 eingesetzt werden.

Die voranstehend beschriebenen Ausführungsformen der Halterungsabschnitte sind jedoch nur als Ausführungsbeispiele zu betrachten, da sowohl andere geometrische Ausformungen der Halterungsabschnitte und der entsprechenden Einziehungen im Bereich der Erfindung liegen, wie eine andere Anordnung der Halterungsabschnitte an der Grundplatte 13 der Haltefeder 12 bzw. eine andere Anordnung der Halterungsabschnitte zueinander. So ist es beispielsweise möglich, auch eine unsymmetrische Anordnung vorzusehen und es ist ebenfalls möglich, unterschiedliche, d.h. in ihrer geometrischen Ausführung und/oder in ihrem Winkel voneinander abweichende Halterungsabschnitte an einer Haltefeder vorzusehen, wobei dann entsprechend unterschiedliche Einziehungen im Trägerblech vorzusehen sind.

Es ist bei allen Ausführungsformen möglich, unter Verwendung von zusätzlichem Trägerblechmaterial und/oder von Korrosionsschutzmaterialien die Einziehungen nach Einlegen der Halterungsabschnitte zu verfüllen, um eine glattflächige Trägerplattenoberfläche herzustellen. Eine entsprechende Verfüllung ist bei 61 in Fig. 16f) angedeutet.

Sofern für die geräuschdämpfende Folie eine Blechfolie oder eine harte Kunststoffolie Verwendung findet, so ist es vorteilhafterweise möglich, diese ebenfalls mit den voranstehend beschriebenen Halterungsabschnitten zu versehen und diese auf der Trägerplattenoberfläche zu haltern. Dies ist insbesondere dann von Vorteil, wenn die aufgebrachte Folie als Zwischenfolie zwischen der Haltefeder und der Trägerplattenoberfläche verwendet wird, da hier die Übertragung von Drehmomenten notwendig wird und somit eine Beanspruchung bzw. Überbeanspruchung der die Folie halternden Klebung entstehen könnte.

Das der Erfindung zugrundeliegende Verfahren zur Anordnung der Haltefeder auf dem Trägerblech ist dadurch gekennzeichnet, daß in die metallische Trägerplatte eine Einziehung eingebracht wird, dann die metallische Haltefeder mit dem Halterungsabschnitt in die Einziehung eingreifend auf die Trägerplatte angeordnet wird und dann aus dem Einziehungsrandbereich Trägerplattenmaterial durch mechanische Materialverschiebung in die Einziehung den Halterungsabschnitt überdeckend hineingedrückt wird. Die Haltefeder, als sogenannte Kralle bezeichenbar, kann dabei auch aus Kunststoff hergestellt sein.

## Patentansprüche

1. Bremsbelag (100) für Scheibenbremsen, insbesondere für Kraftfahrzeuge, bestehend aus einem auf einer Vorderseite (10a) einer Trägerplatte (10) fest angebrachten Block (11) aus Reibwerkstoff und einem auf einer Rückseite (10b) der Trägerplatte angeordneten zur Befestigung an einem Bremskolben und zur Zentrierung dienenden und als Haltefeder (12) bezeichneten Formteil, bestehend aus einer auf die Trägerplatte flächig aufgelegten Grundplatte (13) und mehreren, insbesondere drei auskragend von der Trägerplatte wegweisend abgewinkelten Armen (14), wobei die Grundplatte (13) der Haltefeder (12) mindestens einen zur Trägerplatte (10) hinweisend abgewinkelten und in eine in der Trägerplatte (10) ausgebildete Einziehung (15a) eingreifenden Halterungsabschnitt (15) aufweist, wobei auf der Trägerplatte (10) eine geräuschdämpfende Folie (19) angeordnet ist,
dadurch gekennzeichnet,
daß der einen Winkel (alpha) zur Grundplatte (13) aufweisende Halterungsabschnitt (20,21,22;30;35;39;41; 43;45;47,48;52,53) in eine der geometrischen Form und dem Winkel (alpha) des Halterungsabschnittes im wesentlichen entsprechende Einziehung (23,24,25;34;38; 40;42;44;46;49,50;59,60) in der Trägerplatte (10) eingreifend und von aus dem Einziehungsrandbereich (26,27) in die Einziehung mechanisch hineingedrücktem Trägerplattenmaterial (28) zumindest teilweise überdeckt gehalten ist.

2. Bremsbelag nach Anspruch 1, dadurch gekennzeichnet, daß jeder Halterungsabschnitt (20,21,22;30;35;39;41; 43;45;47,48;52,53) im Randbereich (13a) der Grundplatte (13) angeordnet ist.

3. Bremsbelag nach Anspruch 1, dadurch gekennzeichnet, daß jeder Halterungsabschnitt (47,48;52,53) im Bereich der geometrischen Mitte (49) der Grundplatte (13) angeordnet ist.

4. Bremsbelag nach einem der Ansprüche 1 bis 3, dadurch gekennzeichnet, daß eine Anzahl von Halterungsabschnitten (20,21,22;30;35;39;41;43;45;47,48;52,53) vorgesehen ist.

5. Bremsbelag nach einem der Ansprüche 1 bis 4, dadurch gekennzeichnet, daß die Halterungsabschnitte (20,21, 22;30;35;39;41;43;45;47,48;52,53) in einem Abstand zueinander und rotations-, kreis-, achsen- oder spiegelsymmetrisch angeordnet sind.

6. Bremsbelag nach einem der Ansprüche 1 bis 5, dadurch gekennzeichnet, daß der Halterungsabschnitt (30;52, 53) aus einem zur Grundplatte einen Winkel (alpha) aufweisenden Abschnitt (32;54,55) und einem sich daran anschließenden grundplattenparallelen Abschnitt (33;56,57) besteht.

7. Bremsbelag nach einem der Ansprüche 1 bis 6, dadurch gekennzeichnet, daß der Halterungsabschnitt (21,21,22; 47,48;52,53) zungenartig an der Grundplatte angeordnet oder aus der Grundplatte durch Einbringung entsprechender Einschnitte (26a) in die Grundplatte und anschließendes Abbiegen ausgebildet ist.

8. Bremsbelag nach einem der Ansprüche 1 bis 7, dadurch gekennzeichnet, daß der Halterungsabschnitt (39;41) aus einem dreieckförmigen, halbelliptischen oder halbkreisförmigen abgewinkelten Abschnitt (39a;41a) besteht.

9. Bremsbelag nach einem der Ansprüche 1 bis 8, dadurch gekennzeichnet, daß der Halterungsabschnitt (43) aus einem halbkreisförmig gebogenen oder elliptisch gebogenen Abschnitt (43a) besteht.

10. Bremsbelag nach einem der Ansprüche 1 bis 9, dadurch gekennzeichnet, daß der Halterungsabschnitt (20,21,22;30;35;39;41;43;45;47,48;52,53) an einer seiner Oberflächen eine Oberflächenprofilierung als Halterungsprofil aufweist.

11. Bremsbelag nach einem der Ansprüche 1 bis 10, dadurch gekennzeichnet, daß der Winkel (alpha) des Halterungsabschnittes (20,21,22;30;35;39;41;43;45;47, 48;52,53) zur Grundplatte (13) 30°, 40° oder 90° beträgt.

12. Bremsbelag nach einem der Ansprüche 1 bis 11, dadurch gekennzeichnet, daß die Einziehung (23,24,25; 34;38;40;42;44;46;49,50;59,60) in der Trägerplatte (10) durch Eindrückung und Materialverdichtung ausgebildet ist.

13. Bremsbelag nach einem der Ansprüche 1 bis 11, dadurch gekennzeichnet, daß die Einziehung (23,24,25; 34;38;40;42;44;46;49,50;59,60) in der Trägerplatte (10) durch Materialentfernung bei mechanischer Herausarbeitung ausgebildet ist.

14. Bremsbelag nach einem der Ansprüche 1 bis 13, dadurch gekennzeichnet, daß das aus dem Einziehungsrandbereich (26,27) in die Einziehung (23,24,25;34; 38;40;42;44;49,50;59,60) hineingedrückte Material (28) den Halterungsabschnitt (20,21,22;30;35;39;41; 43;45;47,48;52,53) vollflächig überdeckend angeordnet wird.

15. Bremsbelag nach einem der Ansprüche 1 bis 14, dadurch gekennzeichnet, daß jede Einziehung (23,24, 25;34;38;40;42;44;49,50;59,60) mit einem das hineingedrückte Material (28) überdeckenden und die Einziehung verfüllenden, zusätzlichen Material versehen ist.

16. Bremsbelag nach Anspruch 15, dadurch gekennzeichnet, daß das zusätzliche Material eine Korrosionsschutzmasse ist.

17. Bremsbelag nach einem der Ansprüche 1 bis 16, dadurch gekennzeichnet, daß zwischen der Grundplatte (13) des Formteils (12) und der Trägerplatte (10) die von dem oder den Halterungsabschnitten (20,21, 22;30;35;39;41;43;45;47,48;52,53) durchgreifbare, geräuschdämpfende Folie (19) angeordnet ist.

18. Bremsbelag nach Anspruch 17, dadurch gekennzeichnet, daß die Folie (19) als Blechfolie oder Kunststoffolie ausgebildet ist.

19. Bremsbelag nach Anspruch 17 oder 18, dadurch gekennzeichnet, daß die Folie (19) mindestens einen dem Halterungsabschnitt der Grundplatte des Formkörpers entsprechenden Halterungsabschnitt aufweist, der gleichfalls in die Einziehung in der Trägerplatte eingreifend und dort durch den Halterungsabschnitt der Grundplatte gehaltert angeordnet ist.

20. Bremsbelag nach einem der Anspruch 1 bis 19, dadurch gekennzeichnet, daß das Formteil aus einem Metallblech oder aus Kunststoff mit geeigneter Härte und Elastizität besteht.

21. Verfahren zur Herstellung eines Bremsbelages (100) nach einem der Ansprüche 1 bis 20, dadurch gekennzeichnet, daß in die metallische Trägerplatte (10) mindestens eine Einziehung (23,24,25;34;38;40;42; 46;49,50;59,60) eingebracht wird, dann die metallische Haltefeder mit dem Halterungsabschnitt (20,21,22;30; 35;39;41;43;45;47,48;52,53) in die Einziehung eingreifend auf die Trägerplatte (10) angeordnet wird und dann aus dem Einziehungsrandbereich (26,27) Trägerplattenmaterial (28) durch mechanische Materialverschiebung oder zusätzliches Trägerplattenmaterial und/oder anderen geeigneten Materialien in die Einziehung den Halterungsabschnitt überdeckend hineingedrückt wird.

22. Verfahren nach Anspruch 21, dadurch gekennzeichnet, daß nach Eindrückung des halternden Materials (28) unter Verwendung von zusätzlichem Trägerplattenmaterial und/oder von Korrosionsschutzmaterialien die Einziehungen zur Herstellung einer glatten Trägerplattenoberfläche verfüllt werden.

## Claims

1. Disk brakes friction lining (100), more particularly for motor vehicles comprising a block (11) of friction material rigidly affixed to a front end (10a) of a supporting plate (10) and a shaped element disposed on a rear side (10b) of the supporting plate serving for the attachment to a brake piston and for centering and designated as retaining spring (12), said shaped element being comprised of a base plate (13) placed planely on the supporting plate and several, especially three angled arms (14) projecting so as to point away from the supporting plate, in which case the base plate of the retaining spring has at least one mounting section (15) that is angled in such a way as to point towards the supporting plate (10) and engaging into a recess (15a) constructed in the supporting plate (10), a sound-insulating foil or sheet (19) being disposed on the supporting plate (10), characterized in that
the mounting section (20,21,22;30;35;39;41;43;45;47,48; 52,53) possessing an angle (alpha) relative to the base plate (13), while engaging into a recess (23,24,25;34;38; 40;42;44;46;49,50;59,60) in the supporting plate (10) essentially corresponding to the geometric configuration and the angle (alpha) of the mounting section and by means of supporting plate material (28) from the recess marginal area mechanically pressed into the recess is kept at least partially covered.

2. Friction lining according to Claim 1, characterized in that each mounting section (20,21,22;30;35;39;41;43;45;47, 48;52,53) is disposed within the marginal area (13a) of the base plate (13).

3. Friction lining according to Claim 1, characterized in that each mounting section (47,48;52,53) is disposed within the area of the geometric centre (49) of the base plate (13).

4. Friction lining according to any of claims 1 to 3, characterized in that a plurality of mounting sections (20, 21,22;30;35;39;41;43;45;47,48;52,53) is provided.

5. Friction lining according to any of Claims 1 to 4, characterized in that the mounting sections (20,21,22;30; 35;39;41;43;45;47,48;52,53) are disposed so as to be spaced apart from each other as well as so as to be rotation-symmetrical, circle-symmetrical, axis-symmetrical or mirror-symmetrical.

6. Friction lining according to any of Claims 1 to 5, characterized in that the mounting section (30;52,53) is comprised of a section (32;54,55) possessing an angle (alpha) relative to the base plate and a base-plate parallel section (33;56,57) adjoining thereto.

7. Friction lining according to any of Claims 1 to 6, characterized in that the mounting section (21,21,22;47,48; 52,53) is disposed in a tab-like manner on the base plate or is constructed from the base plate by the construction of pertinent incisions (26a) in the base plate and by a subsequent bending aside.

8. Friction lining according to any of Claims 1 to 7, characterized in that the mounting section (39;41) is comprised of a triangular, semielliptical or semicircular angled section (39a;41a).

9. Friction lining according to any of Claims 1 to 8, characterized in that the mounting section (43) is comprised of a semicircularly curved or elliptically curved section (43a).

10. Friction lining according to any of Claims 1 to 9, characterized in that the mounting section (20,21,22;30; 35;39;41;43;45;47,48;52,53), on one of its surfaces, is provided with a surface profiling in the form of a mounting profile.

11. Friction lining according to any of Claims 1 to 10, characterized in that the angle (alpha) of the mounting section (20,21,22;30;35;39;41;43;45;47,48;52,53) relative to the base plate (13) is 30°, 40° or 90°.

12. Friction lining according to any of Claims 1 to 11, characterized in that the recess (23,24,25;34;38;40;44; 46;49,50;59,60) in the supporting plate (10) is formed by means pressing-in and by material compression.

13. Friction lining according to any of Claims 1 to 11, characterized in that the recess (23,24,25;34;38;40;42; 44;46;49,50;60) is constructed in the supporting plate (10) by material being removed from the solid through machining.

14. Friction lining according to any of Claims 1 to 13, characterized in that the material (28) from the recess marginal area (26,27) pressed into the recess (23,24,25; 34;38;40;42;44;49,50;59,60) is disposed so as to cover the entire mounting section (20,21,22;30;35;39;41;43; 45;47,48;52,53) surface.

15. Friction lining according to any of Claims 1 to 14, characterized in that each recess (23,24,25;34;38;40;42; 44;49,50;59,60) is provided with an additional material covering the pressed-in material (28) and filling in the recess.

16. Friction lining according to Claim 15, characterized in that the additional material is corrosion-protective material.

17. Friction lining according to any of Claims 1 to 16, characterized in that, between the base plate (13) of the shaped element (12) and the supporting plate (10), the sound-insulating foil or sheet (19) that can be reached through by the mounting sections (20,21,22;30; 35;39;41;43;45;47,48;52,53) is disposed.

18. Friction lining according to Claim 17, characterized in that the foil or sheet (19) is constructed in the form of a thin sheet metal foil or a plastic sheet.

19. Friction lining according to Claims 17 or 18, characterized in that the foil (19) is provided with at least one mounting section corresponding to the mounting section of the base plate of the shaped element, which is likewise disposed so as to engage into the recess in the supporting plate and to be retained there by the mounting section of the base plate.

20. Friction lining according to any of Claims 1 to 19, characterized in that the shaped element is comprised of a sheet metal or of a plastic possessing a suitable hardness and elsaticity.

21. Method for the manufacture of a friction lining (100) according to any of Claims 1 to 20, characterized in that, into the metallic supporting plate (10), at least one recess (23,24,25;34;38;40;42;46;49,50;59,60) is constructed, the metallic retaining spring with the mounting section (20,21,22;30;35;39;41;43;45;47;48,52,53) then being disposed on the supporting plate (10) so as to engage into the recess and in that, following this, supporting plate material (28) from the recess marginal area (26,27), by means of a mechanical material displacement or by means of additional supporting plate material and/or other suitable materials is pressed into the recess so as to cover the mounting section.

22. Method according to Claim 21, characterized in that, subsequent to the mounting material (28) having been pressed in while use is made of additional supporting plate material and/or of corrosion-protective material, the recesses are filled in order to produce a smooth supporting plate surface.

## Revendications

1. Garniture de friction (100) pour freins à disque, en particulier pour véhicules automobiles, consistant en un bloc (11) en matériau de friction fixé de manière fixe sur une face antérieure (10a) d'une plaque de support (10) et en une pièce moulée, désignée de ressort de retenue (12), qui est placée sur une face postérieure (10b) de la plaque de support qui sert à la fixation à un piston de frein et au centrage, pièce moulée qui est constituée par une plaque de base (13) posée sur toute la surface de la plaque de support et par plusieurs bras (14), en particulier par trois bras coudés en saillie en étant détournés de (a plaque de support, la plaque de base (13) du ressort de retenue (12) présentant une portion de fixation (15) coudée en étant dirigée vers la plaque de support (10) et s'engrenant dans un renfoncement (15a) configuré dans la plaque de support (10), une feuille amortissant le bruit (19) étant placée sur la plaque de support (19),
**caractérisée en ce**
que la portion de fixation (20, 21, 22 ;30 ; 35; 39 ; 41 ;43 ; 45 ; 47, 48; 52, 53), qui présente un angle (alpha) avec la plaque de base (13), s'engrène dans un renfoncement (23, 24, 25;34 ; 38 ; 40 ; 42 ; 44 ; 46 ; 49, 50 ; 59,60) ménagé dans la plaque de support (10) correspondant essentiellement à la forme géométrique et à l'angle (alpha) de la portion de fixation et qu'elle est maintenue en étant recouverte tout au moins partiellement par de la matière de la plaque de support (28) enfoncée mécaniquement dans le renfoncement à partir de la zone du bord du renfoncement (26, 27).

2. Garniture de frein selon la revendication 1, **caractérisée en ce** que chaque portion de fixation (20, 21, 22 :30 : 35 ; 39 : 41 ;43 ; 45 ; 47, 48 ; 52, 53) est placée dans la zone du bord (13a) de la plaque de base (13).

3. Garniture de frein selon la revendication 1, **caractérisée en ce** que chaque portion de fixation (47, 48 ; 52, 53) est placée dans la zone du milieu géométrique (49) de la plaque de base (13).

4. Garniture de frein selon l'une des revendications 1 à 3, **caractérisée en ce** qu'un nombre de portions de fixation (20, 21, 22 ;30 ; 35 ; 39 ; 41 ;43 ; 45 ; 47, 48 ; 52, 53) est prévu.

5. Garniture de frein selon l'une des revendications 1 à 4, **caractérisée en ce** que les portions de fixation (20, 21, 22;30 ; 35 ; 39 ; 41 ;43; 45 ; 47, 48 ; 52, 53) sont placées à un certain écart l'une de l'autre et en étant de rotation symétrique, de mouvement circulaire symétrique, symétriques à l'axe ou symétriques.

6. Garniture de frein selon l'une des revendications 1 à 5, **caractérisée en ce** que la portion de fixation (30 ;52, 53) est constituée par une portion (32 ; 54, 55) présentant un angle (alpha) par rapport à la plaque de base et une portion (33 ; 56, 57) qui s'y rattache qui est parallèle à la plaque de base.

7. Garniture de frein selon l'une des revendications 1 à 6, **caractérisée en ce** que la portion de fixation (21, 22 ; 47, 48 ; 52, 53) est placée en étant de type languette sur la plaque de base ou est formée à partir de la plaque de base par mise en place d'entailles correspondantes (26a) dans la plaque de base et par recourbement subséquent.

8. Garniture de frein selon l'une des revendications 1 à 7, **caractérisée en ce** que la portion de fixation (39 ; 41) est constituée par une portion coudée triangulaire, en forme de demi-ellipse ou en forme de demi-cercle (39a : 41a).

9. Garniture de frein selon l'une des revendications 1 à 8, **caractérisée en ce** que la portion de fixation (43) est constituée par une portion (43a) recourbée en forme de demi-cercle ou d'ellipse.

10. Garniture de frein selon l'une des revendications 1 à 9, **caractérisée en ce** que la portion de fixation (20, 21, 22 ;30 ; 35 ; 39 ; 41 ;43 ; 45 ; 47, 48 ; 52, 53) présente un profilage de face supérieure comme profil de fixation sur l'une de ses faces supérieures.

11. Garniture de frein selon l'une des revendications 1 à 10, **caractérisée en ce** que l'angle (alpha) de la portion de fixation (20, 21, 22 ;30 ; 35 ; 39 ; 41 ;43 ; 45 ; 47, 48 ; 52, 53) avec la plaque de base (13) est de 30°, 40° ou 90°.

12. Garniture de frein selon l'une des revendications 1 à 11, **caractérisée en ce** que le renfoncement (23, 24, 25 ;34 ; 38 ; 40 ; 42 ; 44 ; 46 ; 49, 50 ; 59,60) dans la plaque de support (10) est configuré en enfonçant et en comprimant de la matière.

13. Garniture de frein selon l'une des revendications 1 à 11, **caractérisée en ce** que le renfoncement (23, 24, 25 ;34 ; 38 ; 40 ; 42 ; 44 ; 46 ; 49, 50 ; 59,60) dans la plaque de support (10) est configuré en enlevant de la matière par dégrossissement mécanique.

14. Garniture de frein selon l'une des revendications 1 à 13, **caractérisée en ce** que la matière (28) qui est enfoncée dans le renfoncement (23, 24, 25 ; 34 : 38 ; 40 : 42 ; 44 ; 46 ; 49, 50 : 59,60) à partir de la zone du bord du renfoncement (26, 27) est placée en recouvrant la portion de fixation (20, 21, 22 ;30 ; 35 ; 39 ; 41 ;43 ; 45 ; 47, 48 ; 52, 53) sur toute sa surface.

15. Garniture de frein selon l'une des revendications 1 à 14, **caractérisée en ce** que chaque renfoncement (23, 24, 25 ;34 ; 38; 40 ; 42 ; 44 ; 46 ; 49, 50 ; 59,60) est pourvu d'une matière supplémentaire qui recouvre la matière enfoncée (28) et qui remplit le renfoncement.

16. Garniture de frein selon la revendication 15, **caractérisée en ce** que la matière supplémentaire est une masse anticorrosive.

17. Garniture de frein selon l'une des revendications 1 à 16, **caractérisée en ce** que la feuille qui amortit le bruit (19), qui peut être traversée par la ou les portions de fixation (20, 21, 22 ;30 ; 35 ; 39 ; 41 ;43 ; 45 ; 47, 48 ; 52, 53), est placée entre la plaque de base (13) de la pièce moulée (12) et la plaque de support (10).

18. Garniture de frein selon la revendication 17, **caractérisée en ce que** la feuille (19) est configurée comme une feuille de tôle ou une feuille de matière plastique.

19. Garniture de frein selon la revendication 17 ou 18, **caractérisée en ce** que la feuille (19) présente au moins une portion de fixation qui correspond à la portion de fixation de la plaque de base du corps moulé qui s'engrène également dans le renfoncement de la plaque de support et qui y est placée en étant fixée par la portion de fixation de la plaque de base.

20. Garniture de frein selon l'une des revendications 1 à 19, caractérisée en ce que la pièce moulée est constituée par une tôle de métal ou une matière plastique avec une dureté et une élasticité appropriées.

21. Procédé pour la fabrication d'une garniture de frein (100) selon l'une des revendications 1 à 20, **caractérisé en ce** qu'au moins un renfoncement (23, 24,25;34 ; 38;40;42;44;46;49,50 ;59,60) est mis en place dans la plaque de support métallique (10), que le ressort de retenue métallique est ensuite placé sur la plaque de support (10) en s'engrenant avec la portion de fixation (20, 21, 22 ;30 ; 35 ; 39 ; 41 ;43 ; 45 ; 47, 48 ; 52, 53) dans le renfoncement et que de la matière de la plaque de support (28) provenant de la zone du bord du renfoncement (26, 27) est enfoncée par déplacement mécanique de matière ou de matière de plaque de support supplémentaire et/ou d'autres matières appropriées sont enfoncées dans le renfoncement en recouvrant la portion de fixation.

22. Procédé selon la revendication 21, **caractérisé en ce** qu'après avoir enfoncé la matière de fixation (28) les renfoncements sont remplis en utilisant de la matière de plaque de support supplémentaire et/ou des matières anticorrosives pour réaliser une face supérieure de plaque de support lisse.
